# EUROPEAN PATENT SPECIFICATION

(11) **EP 3 587 603 B1**
(45) Date of publication and mention of the grant of the patent: **11.08.2021**
(21) Application number: 19382481.0
(22) Date of filing: 07.06.2019
(51) Int. Cl.: C22B 3/46, C22B 15/00, C22B 3/02

(54) **METAL CEMENTING APPARATUS AND CONTINUOUS CEMENTATION METHOD BY MEANS OF SAME**
METALLZEMENTIERUNGSVORRICHTUNG UND KONTINUIERLICHES ZEMENTIERUNGSVERFAHREN UNTER VERWENDUNG DERSELBEN
APPAREIL DE CÉMENTATION MÉTALLIQUE ET PROCÉDÉ DE CÉMENTATION CONTINUE AU MOYEN DE CELUI-CI

(30) Priority: 28.06.2018 ES 201830646
(43) Date of publication of application: 01.01.2020
(73) Proprietor: Cobre las Cruces, S.A.U., 41860 Gerena (Sevilla) (ES)
(72) Inventor: FRÍAS GÓMEZ, Carlos, 28850 TORREJÓN DE ARDOZ (Madrid) (ES); BLANCO AVILÉS, Jorge, Antonio, 41219 LAS PAJANOSAS, GUILLENA (Sevilla) (ES); MORENO BERMEJO, Natalia, 41703 DOS HERMANAS (Sevilla) (ES)
(74) Representative: Herrero & Asociados, S.L.

(56) References cited:
- US-A- 3 333 953
- US-A- 3 806 103
- US-A- 4 152 143
- US-A- 5 403 382
- STEFANOWICZ T ET AL: "Copper recovery by the cementation method", HYDROMETALLURGY, ELSEVIER SCIENTIFIC PUBLISHING CY. AMSTERDAM, NL, vol. 47, no. 1, 1 November 1997 (1997-11-01), pages 69-90, XP026043849, ISSN: 0304-386X, DOI: 10.1016/S0304-386X(97)00036-4 [retrieved on 1997-11-01]
- E.M.M. EL-SAYED ET AL: "Production of copper powder from synthetic wastewaters by cementation on a longitudinal finned rotating zinc cylinder", DESALINATION AND WATER TREATMENT : SCIENCE AND ENGINEERING ; DWT, vol. 57, no. 42, 7 September 2016 (2016-09-07), pages 19959-19964, XP055633085, UK ISSN: 1944-3994, DOI: 10.1080/19443994.2015.1110836

## Description

### Field of the Invention

The present invention corresponds to the technical field of metallurgical plants, specifically to cementing apparatus used therein and the cementing method used, said cementing apparatus being formed by a vessel or tank having therein a solution containing a noble metal, and by cementing means for cementing same formed by a cementing metal or a metal less noble than the one mentioned above, placed in contact with the solution. The cementing metal may have different sizes and shapes according to the objective to be achieved in the cementation process.

### Background of the Invention

Current cementing apparatus are formed by tanks or vessels containing therein a solution containing a noble metal, the objective of which is to achieve chemical reduction of said noble metal by means of using another less noble metal that comes into contact with the solution.

Metal cementation or chemical reduction processes in the metallurgical industries generally focus on two objectives. The first objective is the elimination of impurities from an electrolyte before electrodeposition and the second objective is the recovery of valuable metals.

In the case of cementation for the elimination of impurities, impurities such as Cu, Cd, Ni, Co, etc., which have a very negative effect on the zinc electrodeposition process because they contaminate the cathode zinc or cause current efficiency losses, etc., can be mentioned.

Therefore, those impurities must be eliminated from the loaded zinc electrolyte which, once purified, is fed into electrolysis cells to produce high-quality zinc cathodes. The conventional process for eliminating such impurities consists of adding metallic zinc power (Zn⁰) into a stirred tank, where the zinc power is placed in close contact with the electrolyte and said impurities are cemented according to the following cementation or chemical reduction reaction, the cemented product produced then being separated by means of filtration.

Mₑ²⁺ + Zn⁰ = Me⁰ + Zn²⁺; Me= Cu, Cd, Ni, etc.

As an example of the state of the art, mention can be made to reference document ES0404917 which describes a method for eliminating Cu, Cd, Co, and other impurities from zinc electrolytes in stirred tanks by means of adding zinc power together with other specific additives.

Furthermore, other alternatives to cementation with zinc power in stirred tanks by means of using various apparatus or devices are available. As an example of the state of the art, mention can be made to reference documents ES0432769, ES8607417, ES0424841, and ES8203107.

Document ES0432769 proposes a method with its corresponding installation for purifying aqueous solutions containing metal salts, particularly solutions containing cadmium, copper, and zinc sulfate, using a cementing model with metallic zinc particles or granules in a cylindrical-shaped fluidized bed.

Document ES8607417 defines a method and apparatus for eliminating Cu, Cd, Tl, Ni, Co, As, Sb from zinc electrolytes using a cementing model with metallic zinc particles in a frustoconical-shaped fluidized bed, assuring a concentration between 200 and 400 g/l of suspended zinc particles.

Document ES0424841 discloses an improved apparatus for continuously purifying zinc electrolytes using a cementing model with metallic zinc particles in a fluidized bed with several vertically superimposed chambers, some with a conical shape and others with a frustoconical shape, and with a cage-type transverse stirrer for improving contact between the metallic zinc particles and the electrolyte.

Document ES8203107 defines a method for eliminating metallic impurities from a zinc electrolyte by cementing means in a vibrating reactor and the subsequent separation of the cemented solid and the purified solution in a centrifuge.

Moreover, as regards cementation for the purpose of recovering metals, the technique for recovering copper in the form of cemented metal copper (Cu⁰) from copper-loaded solutions or acidic mine waters placed in contact with a metallic iron fragment (Fe⁰), according to the following cementation or chemical reduction reaction, is widely known:

Cu²⁺ + Fe⁰ = Cu⁰ + Fe²⁺

Various techniques have been used in industry for cementing copper with fragments or bits of iron or iron scrap deposited in channels, rotating drums, or vibrating tanks, through which the copper-loaded solution is circulated.

The cementation technique can also be applied for the recovery of other basic metals such as lead, according to the following cementation or chemical reduction reaction:

Pb²⁺ + Fe⁰ = Pb⁰ + Fe²⁺

As an example of the state of the art, mention can be made to documents ES0373524 and ES8302110.

In that sense, document ES0373524 defines a method for providing iron in the form of granules having a variable size; furthermore, iron scrap may carry other valuable metals that are recovered together with cemented copper product

Document ES8302110 proposes a hydrometallurgy method for treating oxidized lead compounds and recovering this metal by cementing means with metallic iron powder.

In general, the apparatus and methods used in the metallurgical industry for cementing metals according to the two objectives herein analyzed have certain drawbacks such as, regardless of the type of the less noble metal used, i.e., fragments, granules, powder, as the more noble metal settles (is cemented) on the surface of the less noble metal, said surface is coated by the cemented metal and gradually becomes smaller, and the kinetics of the cementation or chemical reduction reaction decreases.

Moreover, as a result of the metal cementing particle being coated with the cemented metal as the cementation reaction progresses, an unreacted less noble metal core will usually remain, contaminating the more noble cemented metal.

In order to solve said drawback, a proposed option is to use certain apparatus and methods based on vibration to dislodge the more noble metal that settles on the surface of the less noble metal, etc. This vibration improves the cementation operation to a certain extent but does not allow attaining a completely free less noble metal surface, giving rise to unreacted less noble metal cores that are retained inside the cemented particles of the more noble metal.

Another possible solution is to use the less noble metal in high excess, adding said metal in the form of powder, for example, giving rise to a large contact surface. In any case, using the cementing metal in excess entails extra cost on one hand and a drawback on the other because the unreacted portion of the unreacted cementing metal adheres to the cemented metal and contaminates it.

Furthermore, these existing cementation processes are usually discontinuous or batch processes; i.e., once the added amount of the less noble metal is depleted, the equipment must be stopped and emptied in order to extract the produced cemented product containing the more noble metal.

All these drawbacks generate lower productivity and higher operating costs.

Scientific article of Stefanowicz et al ("Copper recovery by the cementation method", Hydrometallurgy 47 (1997) 69-90) discloses a method of cementing a metal and a metal cementing apparatus, wherein the investigations showed that copper ions can be effectively removed from sulphate type copper electroplating waste solutions by using scrap iron.

Patent application US5403382A relates to a method of extracting copper from metal bearing ore, and to an apparatus for precipitating high grade copper from an ionized copper and sulfate solution.

Patent application US3806103A discloses an apparatus for the continuous cementation of metals from solutions, using metal granules, and for the removal of the cemented element covering the granules, in order to renew and to activate the surface of said granules.

Patent application US4152143A relates to an apparatus and a method adapted for the continuous precipitation of metal cement from an aqueous solution of a first metal mixed with pieces of second metal.

Patent application US3333953A relates to a process and apparatus for precipitating substances from solution using solid precipitants.

Scientific article of E.M.M. El Sayed et al ("Production of copper powder from synthetic wastewaters by cementation on a longitudinal finned rotating zinc cylinder", Desalination and Water Treatment 57 (2016) 19959-19964) discloses a metal cementing apparatus, wherein the performance of a finned rotating zinc cylinder in the removal of Cu²⁺ from synthetic wastewaters and recovery of metal value by cementation is investigated in relation to different parameters.

### Description of the Invention

According to the invention, the metal cementing apparatus herein proposed is formed by a vessel or tank having therein a liquid phase formed by a solution containing a noble metal, and a solid phase formed by a cementing metal or a metal less noble than the one mentioned above, placed in contact with the solution.

In this cementing apparatus, one of said phases moves at a high speed in relation to the other phase, with the difference in speeds being such that it allows the cementation of the noble metal on the solid phase and the simultaneous detachment and separation thereof.

Furthermore, the cementing apparatus comprises means for generating the movement of at least the phase having the high speed and removing means for removing the precipitated noble metal from the bottom of the tank to the outside thereof.

The means for generating movement can generate movement in the liquid phase, in the solid phase, or in the two phases, but one of the phases always has a higher speed of movement, such that the mentioned condition of causing the cementation of the noble metal and its simultaneous detachment and separation is met.

According to the invention, the means for generating movement comprise at least one shaft including at least one disc formed by cementing metal coupled thereto, where the at least one shaft is attached to at least one drive element which rotates it, such that the solid phase moves faster in relation to the liquid phase, and where the at least one disc associated with the shaft is completely submerged in the solution throughout the entire process.

In this case and according to a preferred embodiment, the at least one shaft comprises a plurality of discs associated with and arranged along at least one area of the shaft.

According to the invention, the at least one shaft is located inside the vessel in a horizontal position, with the height thereof inside the vessel being such that the at least one disc is submerged in the solution.

In any of the preceding cases and according to a preferred embodiment, the means for generating movement have a rotational speed control for achieving detachment of the cemented noble metal by means of the combined effect of centrifugal force and friction with the solution.

As a result of this simultaneous detachment of the cemented metal and the cementation thereof on the less noble metal, the surface available for the cementation process is maximum and remains constant, so optimized efficiency and kinetics are obtained.

Therefore, as maximum cementing surface is constantly provided, the addition of excess cementing metal is not required, obtaining a cemented metal with a higher purity and a minimum cementing metal content.

According to another aspect, in a preferred embodiment the removing means for removing precipitated noble metal are continuous removing means.

In this case and in a preferred embodiment, said removing means are formed by a conveyor belt, a spiral screw conveyor, a suction tube, or pumping means for the cemented metal.

According to another preferred embodiment, the removing means for removing the precipitated noble metal are discontinuous removing means.

In the case where the means for generating movement comprise at least one shaft with at least one metal cementing disc, and according to a preferred embodiment, the at least one disc has a polygonal shape or a curved shape, whether circular or otherwise.

Likewise and according to a preferred embodiment, the at least one disc is arranged perpendicular to the corresponding shaft.

In turn, this specification proposes a continuous cementing method by means of a metal cementing apparatus like the one described above.

Said method consists of passing a continuous flow of solution through a vessel, where said vessel has an inlet for the entry of a solution loaded with a noble metal through an inlet conduit and an outlet for the exit of a solution free of said noble metal through an outlet conduit thereof.

Likewise, in said method a solid phase formed by a cementing metal is reacted with a liquid phase formed by the solution loaded with a noble metal inside the vessel, where one of said phases moves at a high speed in relation to the other one, causing the fixing of said noble metal on the cementing metal, as well as the simultaneous detachment thereof due to friction between the cementing metal and the solution, which leads to the detachment of the noble metal therefrom and the precipitation, by gravity, of the noble metal to the bottom of the vessel.

This method further comprises removing the noble metal precipitated by gravity to the outside of the vessel (2) using removing means for removing same.

According to a preferred embodiment, the solid phase has a high speed with respect to the liquid phase and the cementing metal is arranged in the form of discs associated with a rotating shaft.

In this case and in a preferred embodiment, there are provided multiple rotating shafts with metal cementing discs associated with said shafts.

In any of the preceding cases, the means for generating movement have a rotational speed that can be adjusted to achieve immediate detachment of the noble metal thereof from the cementing metal.

According to the invention, the cementing metal surface available for reacting with the noble metal of the solution remains constant throughout the entire process, said available surface being equal to the maximum surface which can cause said reaction by the detachment of the noble metal adhered thereto and the precipitation of the noble metal to the bottom, the kinetics of the cementation process thereby being maximized.

In this case and in a preferred embodiment, since the available cementing metal surface is constant, the addition of excess cementing metal becomes unnecessary.

A significant improvement over the state of the art is obtained with the metal cementing apparatus and the cementing method herein proposed.

This is due to the attainment of a noble material cementing mode that does not require the addition of excess cementing metal because the means for generating movement of at least one of the phases, with the speed of one of the phases being high in relation to the other one, favors the detachment of the noble material from the cementing surface without having to use mechanical scrapers, assuring that the surface available for cementing is always constant and the largest possible, thereby optimizing process kinetics. In this manner, no extra cost is involved and the cemented product produced from the more noble metal has a high purity and minimum contamination.

The speed provided by the means for generating movement is adjustable so that once cemented, the more noble metal immediately detaches from the rotating surface of the less noble metal by means of centrifugal force and friction between the solid phase and the liquid phase. It is thereby assured that the entire surface of the less noble metal is always free to react with the more noble metal, and as a result, the kinetics of the reduction reaction does not decrease and maximum cementation efficiency is maintained at all times.

This cementing apparatus can work continuously as a result of the produced and deposited noble metal cemented product being in the form of powder or sponge, and being collected on a belt or other means located at the bottom of the tank and transported out continuously.

The present invention therefore constitutes a simple, practical, and effective cementing apparatus which reduces costs and increases production, while the cementing method is similarly practical, easy-to-perform, and highly effective as it achieves a noble metal of a higher quality, lowering operating costs.

### Brief Description of the Drawings

For the purpose of aiding to better understand the features of the invention according to a preferred practical embodiment thereof, a series of drawings is provided as an integral part of said description in which the following is depicted in an illustrative and non-limiting manner:
Figures 1.1 and 1.2 show a schematic view of the section of a metal cementing apparatus and a perspective view of the discs for a first preferred embodiment of the invention.
Figure 2 shows a schematic view of the section of a metal cementing apparatus for a second preferred embodiment of the invention.
Figures 3.1 and 3.2 show a schematic view of the section of a metal cementing apparatus and a perspective view of the dynamic operation of said cementing apparatus for a third preferred embodiment of the invention.
Figure 4 shows a perspective view of the cementing metal in the form of plates of a metal cementing apparatus for a third preferred embodiment of the invention.
Figure 5 shows a perspective view of the cementing metal in the form of rods of a metal cementing apparatus for a fourth preferred embodiment of the invention.
Figure 6 shows a perspective view of the cementing metal in the form of expanded mesh of a metal cementing apparatus for a fifth preferred embodiment of the invention.

### Detailed Description of a Preferred Embodiment of the Invention

In view of the mentioned drawings, it can be seen how the metal cementing apparatus (1) herein proposed is formed by a vessel (2) or tank having therein a liquid phase formed by a solution (3) containing a noble metal, and a solid phase formed by a cementing metal or a metal less noble than the one mentioned above, placed in contact with the solution (3).

In this cementing apparatus, one of said phases moves at a high speed in relation to the other phase, with the difference in speeds being such that it allows the cementation of the noble metal on the solid phase and the simultaneous detachment and separation thereof, and comprises means for generating the movement of at least the phase having the high speed.

Said cementing apparatus (1) further comprises removing means for removing the precipitated noble metal from the bottom of the tank to the outside thereof.

In a first preferred embodiment of the invention, the means for generating movement comprise at least one shaft (4) including at least one disc (5) formed by cementing metal coupled thereto, where the at least one shaft (4) is attached to at least one drive element which rotates it, such that the solid phase moves faster in relation to the liquid phase, and where the at least one disc (5) associated with the shaft (4) is completely submerged in the solution (3) throughout the entire process.

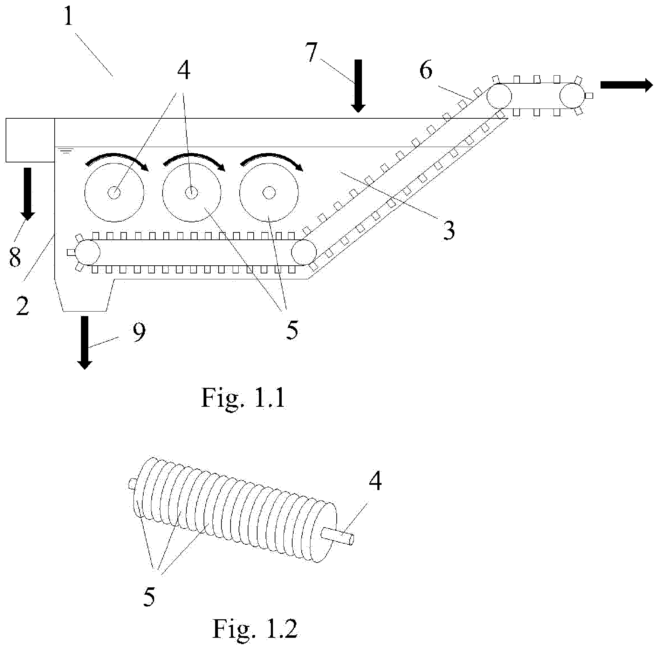

As shown in Figure 1.1, in this first preferred embodiment of the invention the means for generating movement are formed by three shafts (4) with each of them being attached to a respective drive element which rotates them. Each of these shafts (4) has a plurality of discs (5) associated with and arranged along the shaft (4), as can be seen in Figure 1.2.

In this first preferred embodiment of the invention, the noble material dissolved in the solution (3) and to be obtained is lead, whereas the discs (5) are formed by aluminum which constitutes the cementing material in this process.

As shown in said Figure 1.1, the three shafts (4) are arranged inside the vessel (2) in a horizontal position and at a height thereof such that all the discs (5) attached to each of the shafts (4) are submerged in the solution (3).

In this first preferred embodiment of the invention, the means for generating movement formed by the three rotating shafts (4) have a rotational speed control for achieving detachment of the cemented noble metal by means of the combined effect of centrifugal force and friction with the solution.

In this first preferred embodiment of the invention as shown in Figure 1.1, the removing means for removing precipitated noble metal are continuous removing means formed by a conveyor belt (6) in this case.

As shown in Figures 1.1 and 1.2, the discs (5) have a circular shape and are arranged perpendicular to the shaft (4) to which they are coupled.

In that sense, the noble metal dissolved in the solution (3) reacts with the less noble metal making up the discs (5) and the rotational movement of the discs causes the precipitation of the cemented noble metal at the bottom of the vessel (2), such that the conveyor belt (6) extracts it from the vessel (2) continuously. Noble metal cementation occurs continuously given that a constant surface of interaction between the discs (5) and the solution (3) is assured. There is therefore a need for an inlet conduit (7) for the entry of the loaded solution to replenish the noble metal concentration levels in the solution (3), and an outlet conduit (8) for the exit of the depleted solution.

The cementing apparatus has also a drain (9) at the bottom of the vessel (2).

Data of a specific example of this first embodiment of the invention is provided, in which the less noble metal is a metallic aluminum disc (5) which is 80 mm in diameter and coupled to a perpendicular rotating shaft (4) passing through the center of the disc. The aluminum disc (5) is 20 mm thick. The more noble metal is lead which is dissolved in a solution at 85°C and pH 2 and has the following composition:

| Pb (g/l) | Al (g/l) | Na (g/l) | Cl (g/l) |
|---|---|---|---|
| 15.0 | 6.8 | 92.0 | 142.0 |

The aluminum disc (5) is introduced into a 5-liter glass container that is 160 mm in diameter and filled with 2 liters of the preceding solution (3) until it is completely covered by the liquid, and said disc is rotated at different revolutions. The cementation reaction of the lead on the aluminum disc (5) begins immediately, forming a cemented lead product which looks like a spongy powder.

The cemented lead product detaches from the surface of the aluminum disc (5) depending on the rotational speed, such that in this embodiment, the kinetics of the cementation process reaches optimum values with a maximum percentage of cemented noble metal recovery in a given time.

The following table shows the percentage of the surface of the disc (5) which is free of cemented lead product as the rotational speed of the disc increases:

| | | | | |
|---|---|---|---|---|
| Rotational speed of the aluminum disc (rpm) | 0 | 100 | 200 | 300 |
| Surface of the disc free of cemented lead product (%) | 0 | 80 | 97 | 100 |

It can be concluded that the aluminum disc (5) has a rotational speed above which 100% of its surface is available for achieving maximum lead cementation reaction kinetics, as reflected in the data of the % of cemented lead once the first 15 minutes of reaction has elapsed applying different revolutions to the aluminum disc:

| | | | | |
|---|---|---|---|---|
| Rotational speed of the aluminum disc (rpm) | 0 | 100 | 200 | 300 |
| Lead cemented after 15 minutes of reaction (%) | 52 | 95 | 99 | 100 |

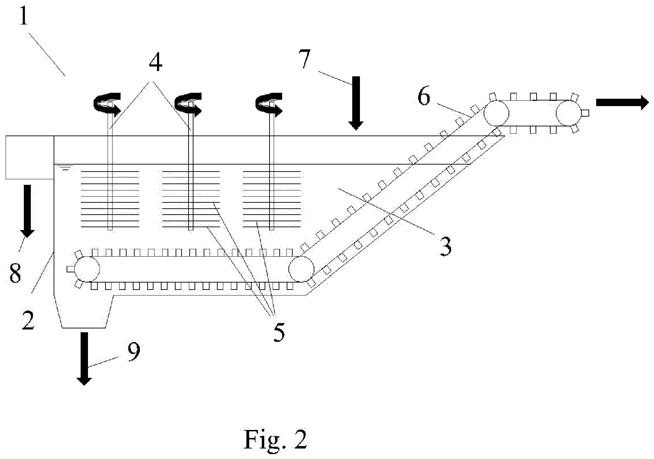

This specification proposes a second embodiment not part of the invention which, as shown in Figure 2, is similar to the first proposed embodiment, with the exception that in this case the means for generating movement comprise three shafts (4) arranged in a vertical position at a height above the vessel (2) such that the plurality of discs (5) of each of the shafts (4) is submerged in the solution (3).

Likewise, this specification also proposes a third embodiment that is not part of the invention in which the means for generating movement comprise at least one stirrer (10) or turbine coupled to a drive element which rotates it at variable speed, such that the liquid phase moves faster in relation to the solid phase, and in which the cementing metal is arranged around the stirrer (10) or turbine, such that the cementing surface is in the form of a frame or cage.

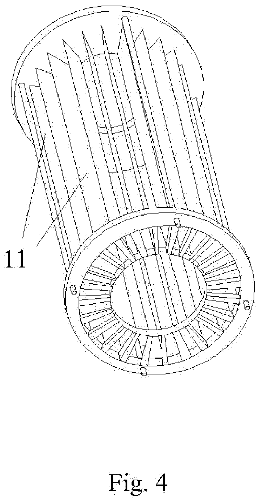

In this third embodiment, the noble material dissolved in the solution (3) and to be obtained is silver, whereas the cementing metal is formed by metallic lead and is arranged in this embodiment, as shown in Figure 4, in the form of plates (12) placed in a frame- or cage-type structure around the stirrer (10). Both the stirrer (10) and the cementing surface formed by said plates (11) are located inside the vessel (2) completely submerged in the solution (3).

In this third embodiment, the removing means for removing precipitated noble metal are continuous means formed by pumping means for the cemented metal (not depicted in the drawings) extracted from the vessel (2) through a lower outlet area (15).

The noble metal dissolved in the solution (3) thereby reacts with the less noble metal making up the plates (11) located in a vertical and parallel manner with respect to the shaft of the stirrer (10), and the rotational movement of the stirrer (10) causes the chemical reduction of the cemented noble metal and the deposition thereof at the bottom of the vessel (2) from which it is continuously extracted. Noble metal cementation occurs continuously under conditions of maximum efficiency given that the maximum surface of interaction between the plates (11) and the solution (3) is assured. There is therefore a need for an inlet conduit (7) for the entry of the loaded solution to replenish the noble metal concentration levels in the solution (3), and an outlet conduit (8) for the exit of the depleted solution.

Data of a specific example of this third embodiment is provided, in which the liquid phase in which the more noble metal is dissolved moves at a high speed in relation to the other solid phase containing the less noble metal. In this case, the less noble metal is metallic lead, whereas the more noble metal is silver which is dissolved in a solution at 85°C and pH 1 and has the following composition:

| Ag, g/l | Pb, g/l | Al, g/l | Cu, g/l | Na, g/l | Cl, g/l |
|---|---|---|---|---|---|
| 0.2 | 10.0 | 6.8 | 0.4 | 92.0 | 142.0 |

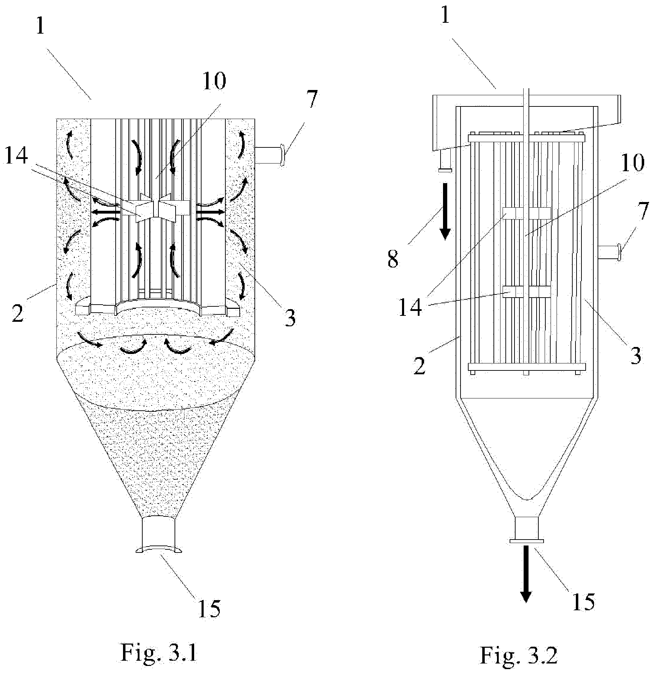

A type of cage containing 10 metallic lead flats or plates (11) measuring 150 mm long, 20 mm wide, and 2 mm thick, and arranged symmetrically around the rotating shaft of the stirrer (10) is introduced into a 5-liter glass container that is 160 mm in diameter and filled with 2 liters of the preceding solution (3). As can be seen in Figures 3.1 and 3.2, a radial-type stirrer (10) that is 60 mm in diameter and has six vertical blades (14) measuring 60 mm long by 20 mm wide is placed inside the cage containing the lead plates (11). The cementation reaction of the silver on the lead flats begins immediately, forming a cemented product in the form of particulate powder containing metal silver and metal copper.

The cemented silver product detaches from the surface of the lead flats or plates (11) depending on the rotational speed of the stirrer (10) which moves and projects the solution (3) at a high speed onto the surface of the lead plates (11), as shown in Figure 3.1.

The following table shows the percentage of the surface of the plates (11) which is free of cemented silver product as the rotational speed of the stirrer (10) moving the solution increases:

| | | | | |
|---|---|---|---|---|
| Rotational speed of the stirrer of the solution, rpm | 0 | 100 | 300 | 800 |
| Surface of the lead flats free of cemented silver product, % | 0 | 0 | 70 | 100 |

It can be concluded that the stirrer (10) moving the solution (3) has a rotational speed above which 100% of the surface of the lead plates (11) is available for achieving maximum silver cementation reaction kinetics, as reflected in the data of the % of cemented silver once the first 30 minutes of reaction has elapsed applying different revolutions on the stirrer of the solution:

| | | | | |
|---|---|---|---|---|
| Rotational speed of the stirrer of the solution, rpm | 0 | 100 | 300 | 800 |
| Plata cemented after 30 minutes of reaction, % | 0 | 30 | 90 | 100 |

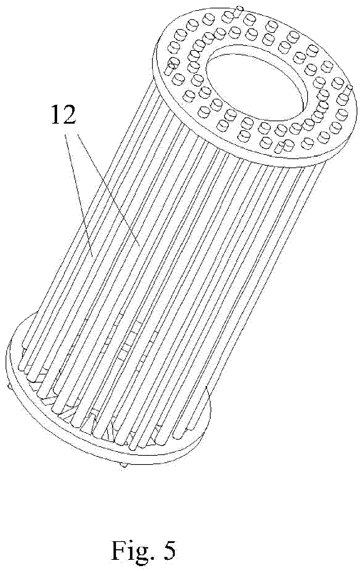

This specification proposes a fourth embodiment not part of the invention which is similar to the third embodiment, with the exception of the form of the cementing metal which, in this case, is in the form of rods (12) placed like a frame or cage around the stirrer (10), as can be seen in Figure 5.

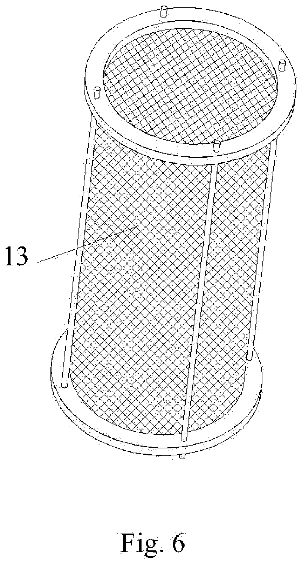

Finally, as shown in Figure 6 this specification proposes a fifth embodiment which is similar to the third and fourth proposed embodiments, with the exception that the cementing metal is in the form of an expanded mesh (13) placed like a frame or cage around the stirrer (10).

In said third, fourth, and fifth embodiments not part of the invention, the stirrer (10) or turbine making up the means for generating movement have a rotational speed control for achieving detachment of the cemented noble metal by means of the combined effect of centrifugal force and friction with the solution.

Therefore, in these embodiments the cementing metal surface available for reacting with the noble metal of the solution remains constant throughout the entire process, said available surface being equal to the maximum surface which can cause said reaction.

This is due to the effect of the friction of the solution which is projected at a high speed onto the surface of the cementing metal, causing the immediate and continuous detachment of the generated cemented metal particles.

Likewise, in this embodiment since the cementing metal surface available is constant, the addition of excess cementing metal becomes unnecessary.

Moreover, this specification in turn comprises a continuous cementing method by means of a cementing apparatus like any of those described above.

Said continuous cementing method consists of passing a continuous flow of solution through a vessel (2), where said vessel (2) has an inlet for the entry of a solution loaded with a noble metal through an inlet conduit (7) and an outlet for the exit of a solution free of said noble metal through an outlet conduit (8) thereof.

Likewise, this method consists of reacting, inside the vessel (2), a solid phase formed by a cementing metal with a liquid phase formed by the solution loaded with a noble metal, where one of said phases moves at a high speed in relation to the other one, causing the fixing of said noble metal on the cementing metal, as well as the simultaneous detachment thereof due to the friction between the cementing metal and the solution, which leads to the detachment of the noble metal therefrom and the precipitation, by gravity, of the noble metal to the bottom of the vessel (2).

Therefore, when this method is applied by means of any of the cementing apparatus described in the first embodiment of the invention, it is the solid phase formed by the cementing metal discs (5) which moves at a high speed with respect to the solution (3) which, in these cases, does indeed move to a certain extent due to the actual rotation of the discs (5). Said movement therefore causes the fixing of the noble metal on the cementing metal, and due to friction of the cementing metal discs (5) with the particles of the solution (3) as they rotate in same, the simultaneous detachment of the cemented noble metal is caused.

In this method for these cementing apparatus of the first embodiment, as indicated the solid phase has a high speed with respect to the liquid phase and the cementing metal is arranged in the form of discs (5) associated with a rotating shaft (4). Furthermore, there are provided multiple rotating shafts (4) with metal cementing discs associated with said shafts.

Moreover, when this method is applied to the cementing apparatus proposed in the third, fourth, and fifth embodiments, it is the liquid phase which moves with respect to the solid phase which is set at zero speed in these proposed embodiments but may have a certain speed in other embodiments. This movement of the turbine or stirrer (10) causing the movement of the solution (3) therefore fixes the noble metal on the cementing metal, and due to the solution (3) being projected at a high speed on the cementing surface, the detachment of the cemented noble metal particles is caused.

In this method applied to the cementing apparatus of the third, fourth, or fifth proposed embodiment, as indicated the liquid phase has a high speed and the cementing metal is arranged around a stirrer (10) or turbine.

Finally, in any of the cases the method comprises removing the noble metal precipitated by gravity to the outside of the vessel (2) using removing means for removing same.

In this method and for a cementing apparatus corresponding to any of the proposed embodiments, the means for generating movement have a rotational speed that can be adjusted to achieve immediate detachment of the noble metal thereof from the cementing metal.

Likewise, the cementing metal surface available for reacting with the noble metal of the solution (3) remains constant throughout the entire process, said available surface being equal to the maximum surface which can cause said reaction by the detachment of the noble metal adhered thereto and the precipitation of the noble metal to the bottom.

Likewise, in this embodiment since the cementing metal surface available is constant, the addition of excess cementing metal becomes unnecessary.

The described embodiments only constitute examples of the present invention, therefore the specific details, terms, and phrases used in the present specification must not be considered limiting, but rather be understood solely as a basis for the claims and as a representative basis which provides an intelligible description as well as sufficient information for one skilled in the art to apply the present invention.

## Claims

1. Metal cementing apparatus (1), formed by a vessel (2) or tank having therein a liquid phase formed by a solution (3) containing a noble metal, and a solid phase formed by a cementing metal or a metal less noble than the one mentioned above, placed in contact with the solution (3), **characterized in that** one of said phases moves at a high speed in relation to the other phase, with the difference in speeds being such that it allows the cementation of the noble metal on the solid phase and the simultaneous detachment and separation thereof, and comprises means for generating the movement of at least the phase having the high speed and removing means for removing the precipitated noble metal from the bottom of the tank to the outside thereof,
wherein the means for generating movement comprise at least one shaft (4) including at least one disc (5) formed by cementing metal coupled thereto, where the at least one shaft (4) is attached to at least one drive element which rotates it, such that the solid phase moves faster in relation to the liquid phase, and where the at least one disc (5) associated with the shaft (4) is completely submerged in the solution (3) throughout the entire process, **characterized in that** the at least one shaft (4) being located inside the vessel (2) in a horizontal position, with the height thereof inside the vessel (2) being such that the at least one disc (5) is submerged in the solution (3).

2. Metal cementing apparatus (1) according to claim 1, **characterized in that** the at least one shaft (4) comprises a plurality of discs (5) associated with and arranged along at least one area of the shaft.

3. Metal cementing apparatus (1) according to any of the preceding claims, **characterized in that** the means for generating movement have a rotational speed control for achieving detachment of the cemented noble metal by means of the combined effect of centrifugal force and friction with the solution.

4. Metal cementing apparatus (1) according to any of the preceding claims, **characterized in that** the removing means for removing precipitated noble metal are continuous removing means.

5. Metal cementing apparatus (1) according to claim 4, **characterized in that** the removing means are formed by a conveyor belt (6), a spiral screw conveyor, a suction tube, or pumping means for the cemented metal.

6. Metal cementing apparatus (1) according to any of claims 1 to 3, **characterized in that** the removing means for removing precipitated noble metal are discontinuous removing means.

7. Metal cementing apparatus (1) according to any of claims 1 to 2, **characterized in that** the at least one disc (5) has a polygonal shape or a curved shape, whether circular or otherwise.

8. Metal cementing apparatus (1) according to any of claims 1 to 2, **characterized in that** the at least one disc (5) is arranged perpendicular to the corresponding shaft (4).

9. Metal cementing apparatus (1) according to any of the previous claims **characterized in that** it also comprises a drain (9) at the bottom of the vessel (2).

10. Continuous cementation method by means of a metal cementing apparatus (1) as defined in claims 1 to 9, **characterized by**
- passing a continuous flow of solution through a vessel (2), where said vessel (2) has an inlet for the entry of a solution loaded with a noble metal through an inlet conduit (7) and an outlet for the exit of a solution free of said noble metal through an outlet conduit (8) thereof;
- reacting, inside the vessel (2), a solid phase formed by a cementing metal with a liquid phase formed by the solution loaded with a noble metal, where one of said phases moves at a high speed in relation to the other one, causing the fixing of said noble metal on the cementing metal, as well as the simultaneous detachment thereof due to friction between the cementing metal and the solution, which leads to the detachment of the noble metal therefrom and the precipitation, by gravity, of the noble metal to the bottom of the vessel (2);
- removing the noble metal precipitated by gravity to the outside of the vessel (2) using removing means for removing same,
- wherein the cementing metal surface available for reacting with the noble metal of the solution remains constant throughout the entire process, said available surface being equal to the maximum surface which can cause said reaction by the detachment of the noble metal adhered thereto and the precipitation of the noble metal to the bottom so that, with the available cementing metal surface being constant, the addition of excess cementing metal becomes unnecessary..

11. Continuous cementation method by means of a metal cementing apparatus according to claim 10, **characterized in that** the solid phase has a high speed with respect to the liquid phase and the cementing metal is arranged in the form of discs associated with a rotating shaft.

12. Continuous cementation method by means of a metal cementing apparatus according to claim 11, **characterized in that** there are provided multiple rotating shafts (4) with cementing metal discs (5) associated with said shafts.

13. Continuous cementation method by means of a metal cementing apparatus according to any of claims 10 to 12, **characterized in that** the means for generating movement have a rotational speed that can be adjusted to achieve immediate detachment of the noble metal thereof from the cementing metal.

14. Continuous cementation method by means of a metal cementing apparatus according to claim 10, **characterized in that** the kinetics of the cementation process reaches optimum values, with a maximum percentage of cemented noble metal recovery in a given time.

## Patentansprüche

1. Metallzementierungsvorrichtung (1), die aus einem Gefäß (2) oder einem Tank besteht, in dem sich eine flüssige Phase, die aus einer ein Edelmetall enthaltenden Lösung (3) gebildet wird, und eine feste Phase befindet, die aus einem Zementierungsmetall oder einem weniger edlen Metall gebildet wird, das mit der Lösung (3) in Kontakt gebracht wird,
**dadurch gekennzeichnet, dass**
sich eine der Phasen mit einer hohen Geschwindigkeit im Verhältnis zu der anderen Phase bewegt, wobei der Geschwindigkeitsunterschied derart ist, dass er die Zementierung des Edelmetalls auf der festen Phase und die gleichzeitige Ablösung und Trennung davon ermöglicht, und Mittel zum Erzeugen einer Bewegung zumindest der Phase mit der hohen Geschwindigkeit und Entfernungsmittel zum Entfernen des ausgefällten Edelmetalls vom Boden des Tanks nach außen umfasst,
wobei die Mittel zur Erzeugung einer Bewegung mindestens eine Welle (4) umfassen, die mindestens eine Scheibe (5) beinhaltet, die durch entsprechende Kopplung eines Zementierungsmetalls geformt ist, wobei die mindestens eine Welle (4) an mindestens einem Antriebselement befestigt ist, das diese so dreht, dass sich die feste Phase im Verhältnis zur flüssigen Phase schneller bewegt, und wobei die mindestens eine Scheibe (5), die der Welle (4) zugeordnet ist, während des gesamten Prozesses vollständig in die Lösung (3) eingetaucht ist, wobei die mindestens eine Welle (4) innerhalb des Gefäßes (2) in einer horizontalen Position angeordnet ist, wobei die Höhe derselben innerhalb des Gefäßes (2) so ist, dass die mindestens eine Scheibe (5) in die Lösung (3) eingetaucht ist.

2. Metallzementierungsvorrichtung (1) nach Anspruch 1, **dadurch gekennzeichnet, dass** die mindestens eine Welle (4) eine Vielzahl von Scheiben (5) umfasst, die mindestens einem Bereich der Welle zugeordnet und entlang dieser angeordnet sind.

3. Metallzementierungsvorrichtung (1) nach einem der vorangegangenen Ansprüche, **dadurch gekennzeichnet, dass** die Mittel zur Erzeugung einer Bewegung eine Drehzahlregelung aufweisen, um eine Ablösung des zementierten Edelmetalls durch die kombinierte Wirkung von Zentrifugalkraft und Reibung mit der Lösung zu erreichen.

4. Metallzementierungsvorrichtung (1) nach einem der vorangegangenen Ansprüche, **dadurch gekennzeichnet, dass** die Entfernungsmittel zum Entfernen von ausgefälltem Edelmetall kontinuierliche Entfernungsmittel sind.

5. Metallzementierungsvorrichtung (1) nach Anspruch 4, **dadurch gekennzeichnet, dass** die Entfernungsmittel durch ein Förderband (6), eine Förderspirale, ein Saugrohr oder Pumpmittel für das zementierte Metall ausgebildet sind.

6. Metallzementierungsvorrichtung (1) nach einem der Ansprüche 1 bis 3, **dadurch gekennzeichnet, dass** die Entfernungsmittel zum Entfernen von ausgefallenem Edelmetall diskontinuierliche Entfernungsmittel sind.

7. Metallzementierungsvorrichtung (1) nach einem der Ansprüche 1 bis 2, **dadurch gekennzeichnet, dass** die mindestens eine Scheibe (5) eine vieleckige Form oder eine gekrümmte Form, sei es kreisförmig oder anders, aufweist.

8. Metallzementierungsvorrichtung (1) nach einem der Ansprüche 1 bis 2, **dadurch gekennzeichnet, dass** die mindestens eine Scheibe (5) senkrecht zu der entsprechenden Welle (4) angeordnet ist.

9. Metallzementierungsvorrichtung (1) nach einem der vorangegangenen Ansprüche, **dadurch gekennzeichnet, dass** sie auch einen Abfluss (9) am Boden des Gefäßes (2) umfasst.

10. Kontinuierliches Zementierungsverfahren mittels einer Metallzementierungsvorrichtung (1) nach einem der Ansprüche 1 bis 9, **gekennzeichnet durch**
- Durchleiten eines kontinuierlichen Lösungsstroms durch ein Gefäß (2), wobei das Gefäß (2) einen Einlass für den Eintritt einer mit einem Edelmetall beladenen Lösung durch eine Einlassleitung (7) und einen Auslass für den Austritt einer von dem Edelmetall freien Lösung durch eine Auslassleitung (8) desselben aufweist;
- Reagieren lassen einer festen Phase, die durch ein Zementierungsmetall gebildet wird, mit einer flüssigen Phase, die durch die mit einem Edelmetall beladene Lösung gebildet wird, im Inneren des Gefäßes (2), wobei sich eine der Phasen mit einer hohen Geschwindigkeit im Verhältnis zu der anderen bewegt, was die Bindung des Edelmetalls an das Zementierungsmetall sowie die gleichzeitige Ablösung desselben aufgrund von Reibung zwischen dem Zementierungsmetall und der Lösung bewirkt, was zur Ablösung des Edelmetalls davon und zur Ausfällung des Edelmetalls durch Schwerkraft am Boden des Gefäßes (2) führt;
- Entfernen des durch Schwerkraft ausgefällten Edelmetalls zur Außenseite des Gefäßes (2) unter Verwendung von Entfernungsmitteln zum Entfernen desselben,
- wobei die für die Reaktion mit dem Edelmetall der Lösung verfügbare Zementierungsmetalloberfläche während des gesamten Prozesses konstant bleibt, wobei die verfügbare Oberfläche gleich der maximalen Oberfläche ist, die die Reaktion durch die Ablösung des daran haftenden Edelmetalls und die Ausfällung des Edelmetalls am Boden bewirken kann, sodass bei konstanter verfügbarer Zementierungsmetalloberfläche die Zugabe von überschüssigem Zementierungsmetall unnötig wird.

11. Kontinuierliches Zementierungsverfahren mittels einer Metallzementierungsvorrichtung nach Anspruch 10, **dadurch gekennzeichnet, dass** die feste Phase eine hohe Geschwindigkeit im Verhältnis zur flüssigen Phase aufweist und das Zementierungsmetall in Form von mit einer rotierenden Welle verbundenen Scheiben angeordnet ist.

12. Kontinuierliches Zementierungsverfahren mittels einer Metallzementierungsvorrichtung nach Anspruch 11, **dadurch gekennzeichnet, dass** mehrere rotierende Wellen (4) mit diesen Wellen zugeordneten zementierungsmetallenen Scheiben (5) vorgesehen sind.

13. Kontinuierliches Zementierungsverfahren mittels einer Metallzementierungsvorrichtung nach einem der Ansprüche 10 bis 12, **dadurch gekennzeichnet, dass** die Mittel zur Erzeugung einer Bewegung eine Rotationsgeschwindigkeit aufweisen, die so eingestellt werden kann, dass eine sofortige Ablösung des Edelmetalls von dem Zementierungsmetall erreicht wird.

14. Kontinuierliches Zementierungsverfahren mittels einer Metallzementierungsvorrichtung nach Anspruch 10, **dadurch gekennzeichnet, dass** die Kinetik des Zementierungsprozesses optimale Werte erreicht, mit einem maximalen Prozentsatz an zementierter Edelmetallrückgewinnung in einer gegebenen Zeit.

## Revendications

1. Installation (1) de cémentation de métal formé d'un récipient (2) ou d'un réservoir dans lequel il y a une phase liquide formée d'une solution (3) contenant un métal noble et une phase solide formée d'un métal de cémentation ou d'un métal moins noble que celui mentionné ci-dessus, placé en contact avec la solution (3), **caractérisée en ce que** l'une de ces phases se déplace à grande vitesse par rapport à l'autre phase, la différence des vitesses étant telle qu'elle permet la cémentation du métal noble sur la phase solide et son détachement et sa séparation simultanée, et comprend des moyens de production du déplacement d'au moins la phase ayant la grande vitesse et des moyens pour retirer le métal noble précipité du fond du réservoir et l'envoyer à l'extérieur,
dans lequel les moyens de production du déplacement comprennent au moins un arbre (4) ayant au moins un disque (5) formé par du métal de cémentation qui y est adjoint, dans lequel le au moins un arbre (4) est fixé à au moins un élément d'entraînement, qui l'entraîne en rotation, de manière à ce que la phase solide se déplace plus rapidement que la phase liquide, et dans lequel le au moins un disque (5) associé à l'arbre (4) est submergé complètement dans la solution (3) pendant toute l'opération, **caractérisée en ce que** le au moins un arbre (4) est placé à l'intérieur du récipient (2) dans une position horizontale en ayant sa hauteur à l'intérieur du récipient (2) de manière telle que le au moins un disque (5) soit submergé dans la solution (3).

2. Installation (1) de cémentation de métal suivant la revendication 1, **caractérisée en ce que** le au moins un arbre (4) comprend une pluralité de disques (5) associés à au moins une région de l'arbre et disposés le long de celle-ci.

3. Installation (1) de cémentation de métal suivant l'une quelconque des revendications précédentes, **caractérisée en ce que** les moyens de production d'un déplacement ont une commande de vitesse de rotation pour obtenir un détachement du métal noble cémenté au moyen de l'effet combiné de la force centrifuge et du frottement avec la solution.

4. Installation (1) de cémentation de métal suivant l'une quelconque des revendications précédentes, **caractérisée en ce que** les moyens de retrait pour retirer du métal noble précipité sont des moyens de retrait continus.

5. Installation (1) de cémentation de métal suivant la revendication 4, **caractérisée en ce que** les moyens de retrait sont formés d'une courroie (6) convoyeuse, d'un convoyeur à vis spirale, d'un tube d'aspiration ou de moyens de pompage du métal cémenté.

6. Installation (1) de cémentation de métal suivant l'une quelconque des revendications 1 à 3, **caractérisée en ce que** les moyens de retrait pour retirer du métal noble précipité sont des moyens de retrait discontinus.

7. Installation (1) de cémentation de métal suivant l'une quelconque des revendications 1 à 2, **caractérisée en ce que** le au moins un disque (5) a une forme polygonale ou une forme incurvée, circulaire ou autre.

8. Installation (1) de cémentation de métal suivant l'une quelconque des revendications 1 à 2, **caractérisée en ce que** le au moins un disque (5) est disposé perpendiculairement à l'arbre (4) correspondant.

9. Installation (1) de cémentation de métal suivant l'une quelconque des revendications précédentes, **caractérisée en ce qu'**elle comprend aussi un drain (9) au fond du récipient (2).

10. Procédé de cémentation en continu au moyen d'une installation (1) de cémentation de métal telle que définie aux revendications 1 à 9, **caractérisé en ce que**
- on fait passer un courant continu d'une solution dans un récipient (2), le récipient (2) ayant une entrée pour l'entrée d'une solution chargée d'un métal noble par un conduit (7) d'entrée et une sortie pour la sortie d'une solution exsempte du métal noble par son conduit (8) de sortie ;
- on fait réagir, à l'intérieur du récipient (2), une phase solide formée d'un métal de cémentation sur une phase liquide formée par la solution chargée d'un métal noble, l'une de ces phases se déplaçant à une grande vitesse par rapport à l'autre, ce qui entraîne la fixation du métal noble sur le métal de cémentation ainsi que son détachement simultané dû au frottement entre le métal de cémentation et la solution, ce qui en entraîne le détachement du métal noble et la précipitation, par gravité, du métal noble au fond du récipient (2) ;
- on retire le métal noble précipité par gravité à l'extérieur du récipient (2), en utilisant des moyens de retrait pour le retirer,
- dans lequel la surface du métal de cémentation disponible pour la réaction sur le métal noble de la solution reste constante dans toute l'opération, la surface disponible étant égale à la surface maximum qui peut provoquer la réaction par le détachement du métal noble qui y adhère et la précipitation du métal noble au fond, de manière, alors que la surface du métal de cémentation disponible reste constante, à ce que l'addition de métal de cémentation en excès ne devienne pas nécessaire.

11. Procédé de cémentation en continu au moyen d'une installation de cémentation de métal suivant la revendication 10, **caractérisé en ce que** la phase solide a une vitesse plus grande que la phase liquide et le métal de cémentation est disposé sous la forme de disques associés à un arbre en rotation.

12. Procédé de cémentation en continu au moyen d'une installation de cémentation de métal suivant la revendication 11, **caractérisé en ce qu'**il est prévu de multiples arbres (4) en rotation, avec des disques (5) en métal de cémentation associés à ces arbres.

13. Procédé de cémentation en continu au moyen d'une installation de cémentation de métal suivant l'une quelconque des revendications 10 à 12, **caractérisé en ce que** les moyens de production d'un déplacement ont une vitesse de rotation qui peut être réglée pour en obtenir un détachement immédiat du métal noble du métal de cémentation.

14. Procédé de cémentation en continu au moyen d'une installation de cémentation de métal suivant la revendication 10, **caractérisé en ce que** la cinétique de l'opération de cémentation atteint des valeurs optimum avec un pourcentage maximum de récupération de métal noble cémenté en un temps donné.
